# EUROPEAN PATENT APPLICATION

(11) **EP 4 086 389 A1**
(43) Date of publication of application: **09.11.2022**
(21) Application number: 20909574.4
(22) Date of filing: 13.11.2020
(51) Int. Cl.: E02B 15/10, B63B 35/32, B63B 43/18

(54) **WATER SURFACE CLEANING ROBOT**

(30) Priority: 31.12.2019 CN 201911412052
(71) Applicant: Nuoya Robot (Zhejiang) Co., Ltd., Huzhou, Zhejiang 313200 (CN)
(72) Inventor: WU, Yajun, Huzhou, Zhejiang 313200 (CN); FAN, Xinyue, Huzhou, Zhejiang 313200 (CN); LI, Jingming, Huzhou, Zhejiang 313200 (CN); TAN, Hongwei, Huzhou, Zhejiang 313200 (CN)
(74) Representative: Cabinet Beau de Loménie
(86) International application number: PCT/CN2020/128577
(87) International publication number: WO 2021/135674

(57) **Abstract**

Provided is a water surface cleaning robot, comprising a body (1) having an accommodating cavity (11) and a storage member (3) having at least one through hole, wherein an anti-collision assembly (5) is fitted at the outer edge of the body (1), the anti-collision assembly (5) comprises at least two anti-collision wheels (51) fitted together, the two anti-collision wheels (51) are fixedly connected to a side end of the body (1) in a rotatable manner by means of a connector (52), the storage member (3) is a cavity structure (32) having an upper end opening and is fitted on the body (1) in a detachable manner, the body (1) is provided with the accommodating cavity (11) running through the upper and lower ends thereof, the accommodating cavity (11) is provided with an upper opening for receiving the storage member from top to bottom, and a rolling member (372) capable of driving garbage to enter the cavity structure (32) is rotatably connected to the storage member (3) or the body (1). By providing the anti-collision structure having at least two anti-collision wheels, the impact force can be effectively decomposed and a good anti-collision effect is achieved, thereby prolonging the service life of the anti-collision wheels and the body. Further, garbage on the water surface enters the storage member from the upper end opening, such that the collected garbage is effectively prevented from scattering, thereby achieving a good storage effect.

## Description

### TECHNICAL FIELD

The present application relates to a water surface cleaning robot, pertaining to the technical field of water surface cleaning.

### BACKGROUND ART

The Chinese patent (Publication No.: CN103935476B) provides an autonomous navigation water surface cleaning robot, which includes a hull. A control device and a driving device are provided on the hull. The control device includes a video acquisition device, a navigation device, a central processing unit, and a communication module. The driving device, the video acquisition device, the navigation device, and the communication module are all connected to the central processing unit. A garbage collection frame is further provided on a lower portion of the hull. A collection opening of the garbage collection frame is located in an advancing direction of the hull. A base station provided on the ground communicates with the central processing unit in a wireless manner. An operator controls, via the base station, the hull to operate to collect garbage on the water surface. An anti-collision wheel is further provided on the side of the hull.

### SUMMARY

### Technical Problems

However, the above solution has the following problems:
Problem 1: Since the garbage collection frame is provided at the lower portion of the hull, it is not convenient for a user to mount and dismount the garbage collection frame. Moreover, since the collection opening of the garbage collection device is provided at the front end and the front end is provided with an opening, the collected garbage is easy to scatter from the opening, resulting in a poor collection effect.

Particularly, when the speed of the hull is slow, the entire garbage collection frame and the garbage are submerged in the water. In this case, if the water flow is turbulent or if the hull changes its direction, the garbage is very easily taken out by the water, resulting in a poor garbage collection effect.

Problem 2: The anti-collision wheel is rotatably connected to the hull by means of a rotating shaft. When the anti-collision wheel collides with other objects, although the anti-collision wheel can rotate, the extension direction of most of the impact force intersects with the rotating shaft of the anti-collision wheel, and most of the impact force is transmitted to the hull via the anti-collision wheel, causing damage to the anti-collision wheel and the hull, resulting in a poor anti-collision effect and thereby affecting the service life of the anti-collision wheel and the hull.

### Solutions of the Problems

### Technical Solutions

In view of the defects of the prior art, the first purpose of the present application is to provide a water surface cleaning robot including an anti-collision structure having at least two anti-collision wheels, which can effectively decompose the impact force and achieve a good anti-collision effect, thereby effectively prolonging the service life of the anti-collision wheels and the body. Moreover, a body of the water surface cleaning robot is provided with an accommodating cavity running through the upper and lower ends thereof so as to receive a storage member from top to bottom, such that it is convenient for a user to mount and dismount the storage member. Further, by changing the existing design in which garbage on the water surface enters the storage member from the front end opening into a design in which the garbage enters the storage member from the upper end opening, the collected garbage can be effectively prevented from scattering from the front end opening, thereby achieving a good storage effect.

The second purpose of the present application is to provide a water surface cleaning robot including a body which is provided with an accommodating cavity running through the upper and lower ends thereof so as to receive a storage member from top to bottom, such that it is convenient for a user to mount and dismount the storage member. Further, by changing the existing design in which garbage on the water surface enters the storage member from the front end opening into a design in which the garbage enters the storage member from the upper end opening, the collected garbage can be effectively prevented from scattering from the front end opening, thereby achieving a good storage effect.

The third purpose of the present application is to provide a convenient-to-clean water surface cleaning robot including a body which is provided with an accommodating cavity running through the upper and lower ends thereof so as to receive a storage member from top to bottom. Moreover, a cover plate is separated from the storage member, and the upper end of the storage member is provided with a holding portion or holding member which is convenient to hold, such that it is convenient for a user to mount and dismount the storage member and thus the user can directly mount and dismount the storage member on the water surface close to the bank.

In order to realize the first purpose and solve problem 1 and problem 2 in the background art, the present application adopts the following technical solution:
A water surface cleaning robot includes a body having an accommodating cavity and a storage member having at least one through hole.

An anti-collision assembly is fitted at the outer edge of the body.

The anti-collision assembly includes at least two anti-collision wheels fitted together.

The two anti-collision wheels are fixedly connected to a side end of the body in a rotatable manner by means of a connector.

The storage member is a cavity structure having an upper end opening and is fitted on the body in a detachable manner.

The body is provided with the accommodating cavity running through the upper and lower ends thereof, the accommodating cavity being provided with an upper opening for receiving the storage member from top to bottom.

A rolling member capable of driving garbage to enter the cavity structure is rotatably connected to the storage member or the body.

Via continuous exploration and test, the present application breaks the technical bias that only one anti-collision wheel is provided in the existing anti-collision structure. By providing the anti-collision structure having at least two anti-collision wheels, the impact force can be effectively decomposed and a good anti-collision effect is achieved, thereby prolonging the service life of the anti-collision wheels and the body.

When the body of the cleaning robot provided by the present application collides with other objects, in most cases, the objects firstly collide with one anti-collision wheel in the anti-collision assembly. Since the axis of the anti-collision wheel does not coincide with the axis of rotation of the anti-collision assembly around the body, the impact force is converted into the rotating force of the anti-collision wheel at this moment, such that the anti-collision wheel and the anti-collision assembly rotate around the body, effectively decomposing the impact force and thereby effectively avoiding impact damage.

In addition, since the two anti-collision wheels are fitted together, at least one anti-collision wheel can abut against other objects even if the anti-collision assembly rotates, effectively preventing the body from colliding with other objects and achieving a simple and practical structure and an ingenious design.

In the present application, the body is provided with the accommodating cavity running through the upper and lower ends thereof, so as to receive the storage member from top to bottom, such that it is convenient for a user to mount and dismount the storage member. In the present application, a garbage collection opening is provided at the upper end of the storage member, and by changing the existing design in which garbage on the water surface enters the storage member from the front end opening into a design in which the garbage enters the storage member from the upper end opening, the collected garbage can be effectively prevented from scattering from the front end opening.

In the present application, in order to facilitate flowing of the garbage into the cavity of the storage member, the rolling member is provided to drive the garbage to enter the storage member, and movement of the body and suction of the garbage are configured independently, such that collection of the garbage can be achieved without movement of the cleaning robot, thereby effectively saving the energy and prolonging the working time of the cleaning robot. Moreover, by changing original passive entry into active entry, the collection efficiency is improved and a better water surface garbage cleaning effect is achieved.

As preferred technical measures:
The anti-collision assembly includes three anti-collision wheels arranged in a staggered manner, the three anti-collision wheels being arranged in a regular triangle shape, axis extension directions of the wheels being parallel. The anti-collision wheels are evenly distributed, so as to further ensure that the objects can meet one of the anti-collision wheels regardless of angles at which the collision with the anti-collision assembly occurs and ensure that at least one anti-collision wheel can correspond to other objects no matter how the anti-collision assembly rotates.

There may be four or more anti-collision wheels. When there are more than three anti-collision wheels, the improvement to the anti-collision effect is not obvious, while the manufacturing costs and fitting difficulty are increased. Those skilled in the art may make a choice according to the actual situation.

The connector is a triangular member having a protruding side end respectively connected to the anti-collision wheel, preventing the connector from interfering with a collision position.

As preferred technical measures:
A first pin hole for connection to the body is provided in the center of the triangular member.

A second pin hole for connection to the anti-collision wheel is respectively provided at the side end of the triangular member.

The triangular member is pinned on the body in a rotatable manner by means of the first pin hole.

The anti-collision wheel is pinned on the triangular member in a rotatable manner by means of the second pin hole.

The anti-collision wheels can rotate independently, thus further improving the anti-collision effect and decreasing impact wear.

As preferred technical measures:
The body is a square structure having four side ends or two side surfaces of the front end each provided with the anti-collision assembly, effectively preventing the body from colliding with other objects and achieving a simple and practical structure.

The anti-collision assembly is partially or completely exposed out of the body. The anti-collision assembly is partially exposed, such that the structural aesthetic can be effectively improved and the structure of the present application is compact.

As preferred technical measures:
The body is provided with a mounting cavity for accommodating a portion of the structure of the anti-collision assembly.

The at least two anti-collision wheels are exposed out of the mounting cavity, achieving a simple and practical structure.

As preferred technical measures:
Two sides of the front end of the body are each provided with a mounting cavity having a front end opening and for mounting a ranging sensor.

The ranging sensor is fitted deep in the mounting cavity and has a transmitting end facing to the front end opening of the mounting cavity.

The transmitting end is spaced from the front end opening by a certain distance. Due to a relatively large error in short distance measurement of an existing ranging sensor, a transmitting distance of the transmitting end can be increased by mounting the transmitting end deep in the mounting cavity, so as to effectively improve the ranging accuracy and thus achieve an ingenious design and a practical and feasible solution.

The ranging sensor is a laser ranging sensor, an ultrasonic ranging sensor, or an infrared ranging sensor.

As preferred technical measures:
The rolling member is provide with a sheet structure capable of producing a water flow and adjacent to the upper end opening of the cavity structure.

The sheet structure is a strip blade or brush member. The upper edge of the strip blade is higher than the upper edge of the storage member, such that the driven garbage can automatically fall into the cavity of the storage member under the effect of the water flow and the gravity, thus achieving a simple and practical structure.

The projections of the strip blade and the upper end opening of the storage member in the vertical direction at least partially overlap, such that the driven garbage directly falls into the cavity of the storage member, thus effectively preventing the garbage from falling.

Two sides of the rear end of the body are each provided with a driver for pushing the body to move.

As preferred technical measures:
The rolling member is fitted at an upper end portion of the storage member and is connected to a driving source.

The driving source is fitted on the body and is connected to the rolling member by means of a gear set.

Due to a limited structural space of the storage member, it is impossible to mount a battery and a corresponding circuit. In order to realize energy supply of the driving source, the driving source is fitted on the body. Moreover, in order to realize flexible dismounting of the storage member, the driving source and the rolling member are connected via a gear pair, so as to realize the effective contact and rapid separation of the driving source and the rolling member, thus achieving an ingenious design and a practical and feasible solution.

The gear set includes a first gear fixedly connected to the rolling member and a second gear fixedly connected to a rotating end of the driving source, the face of the first gear being perpendicular to the axial extension line of the rolling member, and the face of the second gear being perpendicular to the axial extension line of the rotating end of the driving source.

As preferred technical measures:
The storage member is provided with a holding portion or holding member which is convenient for a user to hold and above which a cover plate is provided.

One end of the cover plate is hinged on the body, the cover face of the cover plate partially or completely covers the upper end opening of the storage member, and the other end of the cover plate is connected to a lifting assembly for driving the cover plate to go up and down, the lifting assembly being an air rod, a hydraulic rod, or a ball screw assembly.

In the present application, the cover plate and the storage member are separately provided, the cover plate is hinged on the body, the cover face of the cover plate can cover the storage member, and no cover plate is separately provided on the storage member, such that it is convenient for a user to mount and dismount the storage member. Moreover, the upper end of the storage member is provided with the holding portion or holding member which is convenient to hold, such that it is more convenient for the user to mount and dismount the storage member. Therefore, the user can directly mount and dismount the storage member on the water surface without pulling the cleaning robot ashore. The operations are simple and easy and it is convenient for the user to clean the water surface cleaning robot, thus achieving good user experience.

In the present application, the holding portion or holding member is hidden in the cover plate, such that the overall aesthetic of the cleaning robot is not affected and the visual effect is good.

In addition, the cover plate provided on the body can effectively limit upward movement of the storage member, without addition of other structures for limiting the upward movement of the storage member. Therefore, the present application requires fewer parts and is easy to be produced, thus effectively reducing the manufacturing costs.

The storage member is provided with a connecting portion for fitting the rolling member, the connecting portion being an arc structure rotationally connected to the rolling member and being mounted on the body.

Two internal sides of the body are each provided with an arc notch. The arc structure matches the shape of the arc notch, so as to achieve effective positioning of the rolling member without affecting normal rotation of the rolling member, thus achieving a simple and practical structure.

The inner wall of the upper end of the accommodating cavity of the body is provided with at least one blocking portion, the blocking portion extending into the cavity to form a support structure capable of abutting against the storage member. The body positions the storage member by means of the blocking portion, without the provision of a screwing structure, making it more convenient for a user to directly pick and place the storage member on the body and thus achieving a simple and practical structure.

The outer wall of the upper end of the storage member is provided with at least one protruding rib, the protruding rib extending outwards and protruding from the main body of the storage member and capable of being mounted on the upper end wall surface of the blocking portion of the body.

A vertical distance between the upper wall surface of the blocking portion and the upper end surface of the body is A, and a vertical distance between the lower wall surface of the protruding rib and the upper end surface of the storage member is B, A being greater than or equal to B.

As preferred technical measures:
The holding member is a handle member transversely provided on two sides or two ends of the storage member.

The handle member is located at the transverse center of gravity of the storage member, such that the stress is uniform when the user holds the holding member.

The lower end of the storage member is fixedly connected to a disinfection box having an accommodating space. The disinfection box is provided with several holes, and a box cover is detachably fitted on the main body of the disinfection box.

The disinfection box and the storage member are integrally provided, and both the disinfection and garbage collection functions can be achieved without the provision of other structures. The structure can facilitate production and manufacture and is convenient for the user to observe the use situation of disinfection products such as disinfectants or disinfection solids, thus facilitating timely replacement. The user can directly know the use situation of the disinfection products or replace the disinfection products when picking and placing the storage member, saving the time and effort and thus achieving good user experience.

The cover plate is obliquely fitted on the body and has a front end lower than a rear end, the front end and the rear end being in smooth transition, the rear end of the cover plate being hinged on the body, and the front end being clamped on the body.

The upper end surface of the cover plate is covered with a solar panel for absorbing solar energy, and a transparent window which facilitates observation of a collection situation of the storage member is provided in the central position of the cover plate.

The lower end of the body is provided with a trumpet opening at a position adjacent to the rolling member, the outer diameter of the trumpet opening being larger than the inner diameter.

The cavity structure of the storage member is a box structure having five wall surfaces, including a front wall surface, a rear wall surface, a left wall surface, a right wall surface, and a lower wall surface, at least the rear wall surface and the lower wall surface being each provided with several through holes.

One of the connecting portion of the storage member and the cover plate is provided with a square groove, and the other is provided with a square protrusion, the structural shapes of the square groove and the square protrusion matching each other. A torque is produced as the driving source drives the rolling member to rotate, making the storage member vibrate. Therefore, square positioning structures are provided on the connecting portion and the cover plate, so as to realize effective positioning of the storage member implemented by the cover plate, thus achieving a simple and practical structure.

In order to realize the second purpose and solve problem 1 in the background art, the present application adopts the following technical solution:
A water surface cleaning robot includes a body having an accommodating cavity and a storage member having at least one through hole.

The storage member is a cavity structure having an upper end opening and is fitted on the body in a detachable manner.

The body is provided with the accommodating cavity running through the upper and lower ends thereof, the accommodating cavity being provided with an upper opening for receiving the storage member from top to bottom.

A rolling member capable of driving garbage to enter the cavity structure is rotatably connected to the storage member or the body.

In the present application, the body is provided with the accommodating cavity running through the upper and lower ends thereof, so as to receive the storage member from top to bottom, such that it is convenient for a user to mount and dismount the storage member. In the present application, a garbage collection opening is provided at the upper end of the storage member, and by changing the existing design in which garbage on the water surface enters the storage member from the front end opening into a design in which the garbage enters the storage member from the upper end opening, the collected garbage can be effectively prevented from scattering from the front end opening.

In the present application, in order to facilitate flowing of the garbage into the cavity of the storage member, the rolling member is provided to drive the garbage to enter the storage member, and movement of the body and suction of the garbage are configured independently, such that collection of the garbage can be achieved without movement of the cleaning robot, thereby effectively saving the energy and prolonging the working time of the cleaning robot. Moreover, by changing original passive entry into active entry, the collection efficiency is improved and a better water surface garbage cleaning effect is achieved.

As preferred technical measures:
The rolling member is provide with a sheet structure capable of producing a water flow and adjacent to the upper end opening of the cavity structure.

The sheet structure is a strip blade or brush member. The upper edge of the strip blade is higher than the upper edge of the storage member, such that the driven garbage can automatically fall into the cavity of the storage member under the effect of the water flow and the gravity, thus achieving a simple and practical structure.

The projections of the strip blade and the upper end opening of the storage member in the vertical direction at least partially overlap, such that the driven garbage directly falls into the cavity of the storage member, thus effectively preventing the garbage from falling.

Two sides of the rear end of the body are each provided with a driver for pushing the body to move.

As preferred technical measures:
The rolling member is fitted at an upper end portion of the storage member and is connected to a driving source.

The driving source is fitted on the body and is connected to the rolling member by means of a gear set.

Due to a limited structural space of the storage member, it is impossible to mount a battery and a corresponding circuit. In order to realize energy supply of the driving source, the driving source is fitted on the body. Moreover, in order to realize flexible dismounting of the storage member, the driving source and the rolling member are connected via a gear pair, so as to realize the effective contact and rapid separation of the driving source and the rolling member, thus achieving an ingenious design and a practical and feasible solution.

The gear set includes a first gear fixedly connected to the rolling member and a second gear fixedly connected to a rotating end of the driving source, the face of the first gear being perpendicular to the axial extension line of the rolling member, and the face of the second gear being perpendicular to the axial extension line of the rotating end of the driving source.

In order to realize the third purpose and solve problem 1 in the background art, the present application provides another technical solution:
A water surface cleaning robot includes a body having an accommodating cavity and a storage member having at least one through hole.

The storage member is a cavity structure having an upper end opening and is fitted on the body in a detachable manner.

The body is provided with the accommodating cavity running through the upper and lower ends thereof, the accommodating cavity being provided with an upper opening for receiving the storage member from top to bottom.

The storage member is provided with a holding portion or holding member which is convenient for a user to hold and above which a cover plate is provided.

One end of the cover plate is hinged on the body, and the cover face of the cover plate partially or completely covers the upper end opening of the storage member.

In the present application, the body is provided with the accommodating cavity running through the upper and lower ends thereof, so as to receive the storage member from top to bottom, such that it is convenient for a user to mount and dismount the storage member. In the present application, a garbage collection opening is provided at the upper end of the storage member, and by changing the existing design in which garbage on the water surface enters the storage member from the front end opening into a design in which the garbage enters the storage member from the upper end opening, the collected garbage can be effectively prevented from scattering from the front end opening.

In the present application, the cover plate and the storage member are separately provided, the cover plate is hinged on the body, the cover face of the cover plate can cover the storage member, and no cover plate is separately provided on the storage member, such that it is convenient for a user to mount and dismount the storage member. Moreover, the upper end of the storage member is provided with the holding portion or holding member which is convenient to hold, such that it is more convenient for the user to mount and dismount the storage member. Therefore, the user can directly mount and dismount the storage member on the water surface without pulling the cleaning robot ashore. The operations are simple and easy and it is convenient for the user to clean the water surface cleaning robot, thus achieving good user experience.

In the present application, the holding portion or holding member is hidden in the cover plate, such that the overall aesthetic of the cleaning robot is not affected and the visual effect is good.

In addition, the cover plate provided on the body can effectively limit upward movement of the storage member, without addition of other structures for limiting the upward movement of the storage member. Therefore, the present application requires fewer parts and is easy to be produced, thus effectively reducing the manufacturing costs.

The garbage includes industrial waste, domestic waste, animal and plant garbage, etc., such as leaves, floating paper, insect remains, water surface floating oil dirt, water surface floating dust, garbage bags, and branches.

### Beneficial Effects of the Present Application

### Beneficial Effects

1. Via continuous exploration and test, the present application breaks the technical bias that only one anti-collision wheel is provided in the existing anti-collision structure. By providing the anti-collision structure having at least two anti-collision wheels, the impact force can be effectively decomposed and a good anti-collision effect is achieved, thereby prolonging the service life of the anti-collision wheels and the body.
   When the body of the cleaning robot provided by the present application collides with other objects, in most cases, the objects firstly collide with one anti-collision wheel in the anti-collision assembly. Since the axis of the anti-collision wheel does not coincide with the axis of rotation of the anti-collision assembly around the body, the impact force is converted into the rotating force of the anti-collision wheel at this moment, such that the anti-collision wheel and the anti-collision assembly rotate around the body, effectively decomposing the impact force and thereby effectively avoiding impact damage.
   In addition, since the two anti-collision wheels are fitted together, at least one anti-collision wheel can abut against other objects even if the anti-collision assembly rotates, effectively preventing the body from colliding with other objects and achieving a simple and practical structure and an ingenious design.
2. In the present application, the body is provided with the accommodating cavity running through the upper and lower ends thereof, so as to receive the storage member from top to bottom, such that it is convenient for a user to mount and dismount the storage member. In the present application, a garbage collection opening is provided at the upper end of the storage member, and by changing the existing design in which garbage on the water surface enters the storage member from the front end opening into a design in which the garbage enters the storage member from the upper end opening, the collected garbage can be effectively prevented from scattering from the front end opening.
   In the present application, in order to facilitate flowing of the garbage into the cavity of the storage member, the rolling member is provided to drive the garbage to enter the storage member, and movement of the body and suction of the garbage are configured independently, such that collection of the garbage can be achieved without movement of the cleaning robot, thereby effectively saving the energy and prolonging the working time of the cleaning robot. Moreover, by changing original passive entry into active entry, the collection efficiency is improved and a better water surface garbage cleaning effect is achieved.
3. In the present application, the storage member can be received from top to bottom, the cover plate and the storage member are separately provided, the cover plate is hinged on the body, the cover face of the cover plate can cover the storage member, and no cover plate is separately provided on the storage member, such that it is convenient for a user to mount and dismount the storage member. Moreover, the upper end of the storage member is provided with the holding portion or holding member which is convenient to hold, such that it is more convenient for the user to mount and dismount the storage member. Therefore, the user can directly mount and dismount the storage member on the water surface without pulling the cleaning robot ashore. The operations are simple and easy and it is convenient for the user to clean the water surface cleaning robot, thus achieving good user experience.

In the present application, the holding portion or holding member is hidden in the cover plate, such that the overall aesthetic of the cleaning robot is not affected and the visual effect is good.

### BRIEF DESCRIPTION OF THE DRAWINGS

FIG. 1 is a schematic view of an overall structure according to the present application.
FIG. 2 is a schematic view of a structure in which a cover plate is in an open state according to the present application.
FIG. 3 is a schematic view of an anti-collision structure according to the present application.
FIG. 4 is a schematic view of the structure illustrated in FIG. 3 viewed from another angle.
FIG. 5 is a schematic view of the structure inclined upwards for a certain angle according to the present application.
FIG. 6 is a schematic view of a structure of a storage member according to the present application.
FIG. 7 is a schematic view of the structure illustrated in FIG. 6 viewed from another angle.
FIG. 8 is a schematic view of the structure illustrated in FIG. 7 viewed from another angle.
FIG. 9 is a schematic exploded view of the structure illustrated in FIG. 8.
FIG. 10 is an exploded view according to the present application.
FIG. 11 is a schematic view of a structure according to the present application (fitted with no storage member).
FIG. 12 is a schematic view of the structure illustrated in FIG. 1 viewed from another angle.

### Description of Reference Signs:

1. body; 11. accommodating cavity; 12. blocking portion; 13. arc notch; 14. second gear; 15. mounting cavity; 2. cover plate; 21. positioning protrusion; 22. square protrusion; 23. solar panel; 24. transparent window; 3. storage member; 31. holding member; 32. cavity structure; 321. front wall surface; 322. rear wall surface; 323. left wall surface; 324. right wall surface; 325. lower wall surface; 33. through hole; 34. protruding rib; 35. disinfection box; 36. box cover; 37. collector; 38. connecting portion; 311. positioning groove; 371. sheet structure; 372. rolling member; 373. first gear; 381. square groove; 4. trumpet opening; 5. anti-collision assembly; 51. anti-collision wheel; 52. connector; 521. first pin hole; 522. second pin hole; 6. driver.

### DESCRIPTION OF THE EMBODIMENTS

### Implementation of the Present Application

In order to make the purpose, technical solutions, and advantages of the present application clearer, the present application will be further described below in conjunction with the drawings and embodiments. It should be understood that the specific embodiments described herein are only used to explain the present application, but are not intended to limit the present application.

On the contrary, the present application covers any alternatives, modifications, equivalent methods and solutions defined by the claims within the spirit and scope of the present application. Further, in order to enable the public to have a better understanding of the present application, some specific details are described in detail in the following detailed description of the present application. Those skilled in the art can fully understand the present application without the description of these details.

It should be noted that when two elements are "fixedly connected" or "fixedly coupled", the two elements may be directly connected or there may be an intermediate element. On the contrary, when an element is defined to be "directly on" another element, there is no intermediate element. The terms "horizontal", "vertical", "upper", "lower", and similar expressions are used herein for illustrative purposes only.

Unless otherwise defined, all technical and scientific terms used herein have the same meanings as those commonly understood by those skilled in the technical field of the present application. The terms used herein are only for the purpose of describing the specific embodiments, and are not intended to limit the present application.

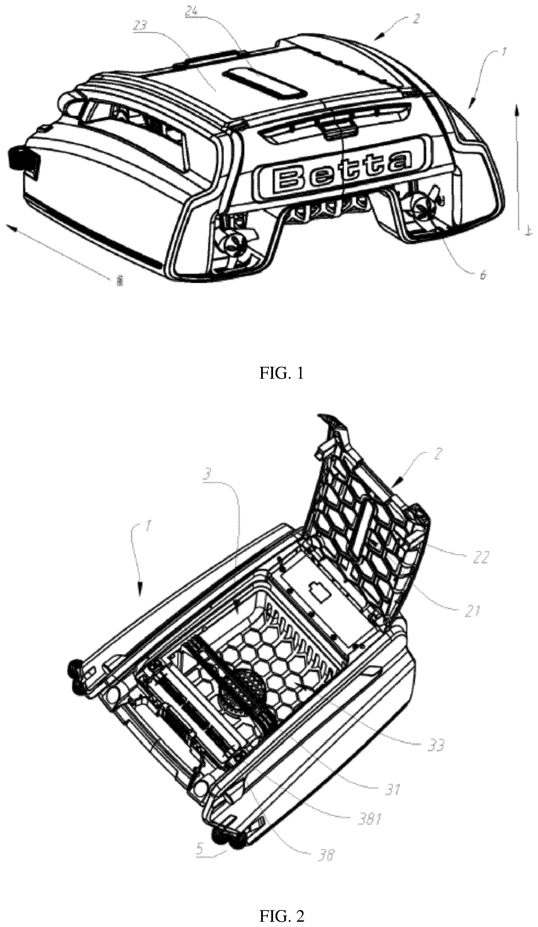

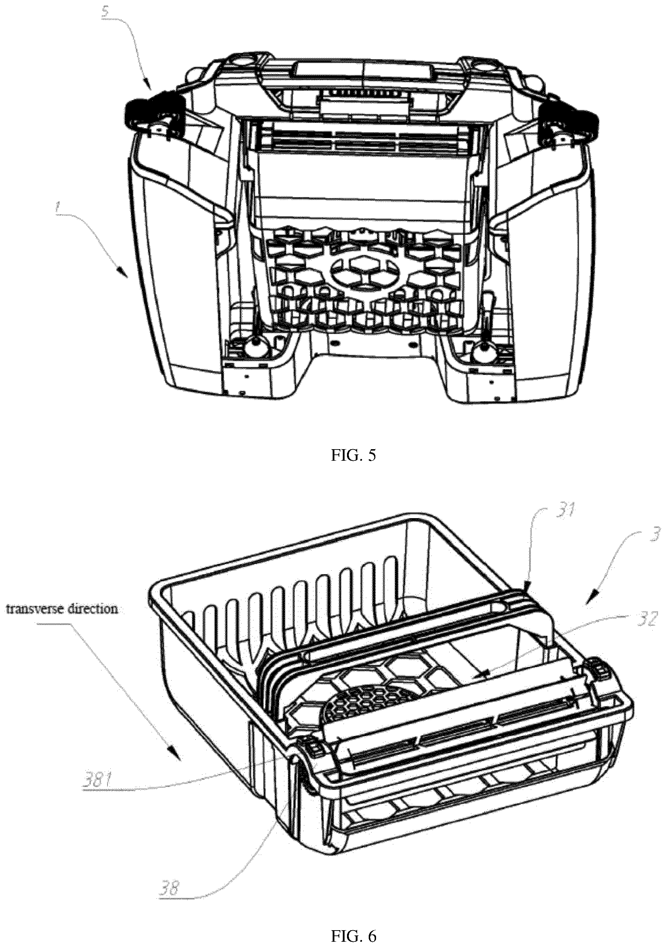

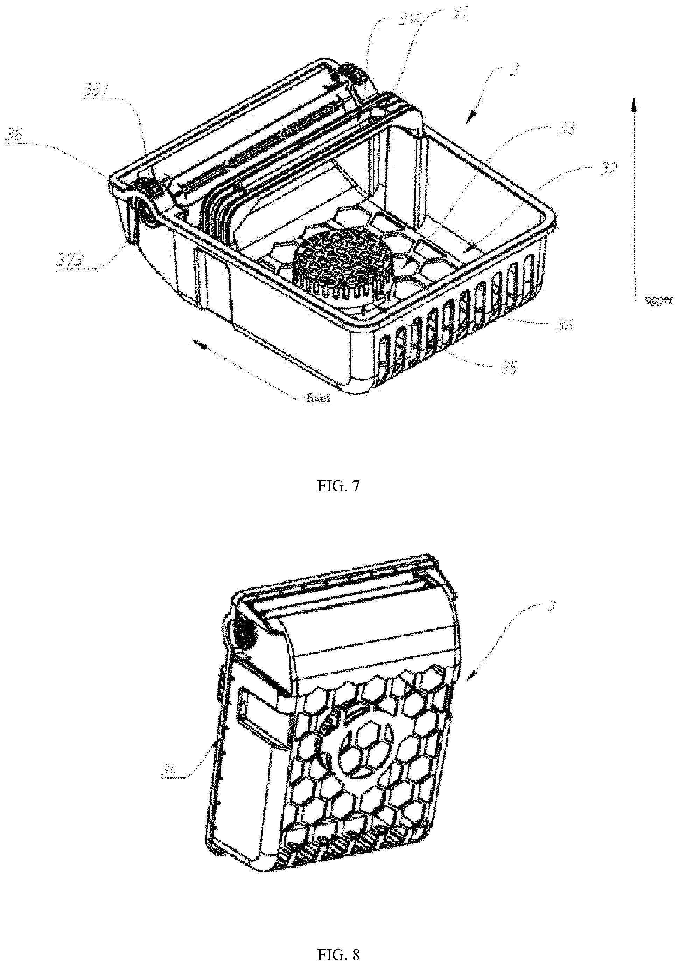

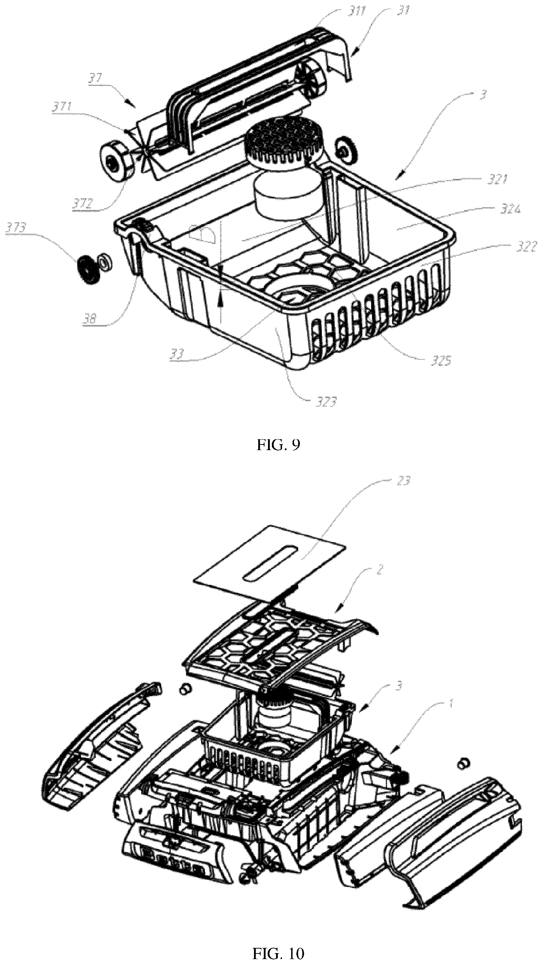

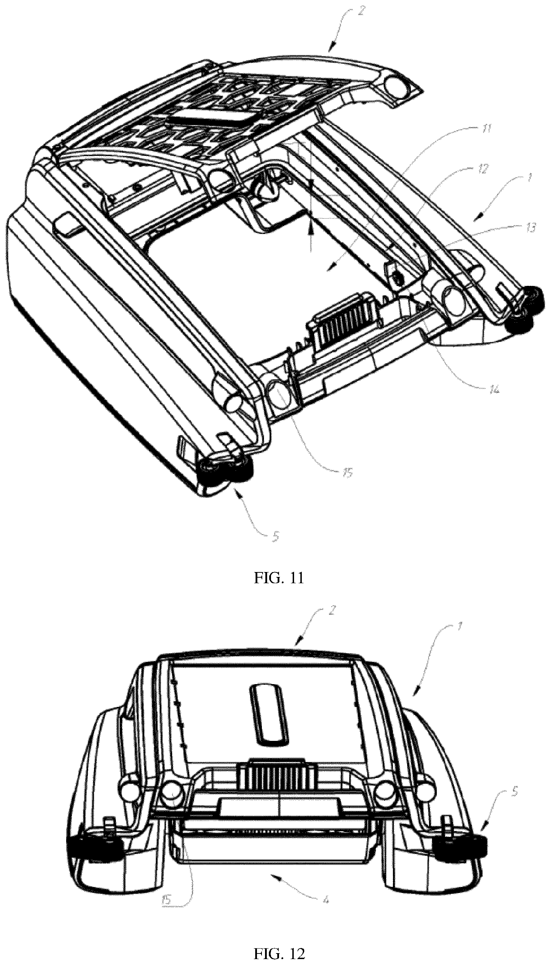

Referring to FIGS. 1-12, a specific embodiment of the present application is as follows:
A water surface cleaning robot includes a body 1 having an accommodating cavity 11 and a storage member 3 having at least one through hole 33.

The storage member 3 is a cavity structure 32 having an upper end opening and is fitted on the body 1 in a detachable manner.

The body 1 is provided with the accommodating cavity 11 running through the upper and lower ends thereof, the accommodating cavity 11 being provided with an upper opening for receiving the storage member 3 from top to bottom.

A rolling member 372 capable of driving garbage to enter the cavity structure 32 is rotatably connected to the storage member 3 or the body 1.

In the present application, the body 1 is provided with the accommodating cavity 11 running through the upper and lower ends thereof, so as to receive the storage member 3 from top to bottom, such that it is convenient for a user to mount and dismount the storage member 3. In the present application, a garbage collection opening is provided at the upper end of the storage member 3, and by changing the existing design in which garbage on the water surface enters the storage member 3 from the front end opening into a design in which the garbage enters the storage member 3 from the upper end opening, the collected garbage can be effectively prevented from scattering from the front end opening.

In the present application, in order to facilitate flowing of the garbage into the cavity of the storage member 3, the rolling member 372 is provided to drive the garbage to enter the storage member 3, and movement of the body 1 and suction of the garbage are configured independently, such that collection of the garbage can be achieved without movement of the cleaning robot, thereby effectively saving the energy and prolonging the working time of the cleaning robot. Moreover, by changing original passive entry into active entry, the collection efficiency is improved and a better water surface garbage cleaning effect is achieved.

Another specific embodiment of the present application is as follows:
A water surface cleaning robot includes a body 1 having an accommodating cavity 11 and a storage member 3 having at least one through hole 33.

The storage member 3 is a cavity structure 32 having an upper end opening and is fitted on the body 1 in a detachable manner.

The body 1 is provided with the accommodating cavity 11 running through the upper and lower ends thereof, the accommodating cavity 11 being provided with an upper opening for receiving the storage member 3 from top to bottom.

The storage member 3 is provided with a holding portion or holding member 31 which is convenient for a user to hold and above which a cover plate 2 is provided.

One end of the cover plate 2 is hinged on the body 1, and the cover face of the cover plate partially or completely covers the upper end opening of the storage member 3.

In the present application, the cover plate 2 and the storage member 3 are separately provided, the cover plate 2 is hinged on the body 1, the cover face of the cover plate can cover the storage member 3, and no cover plate 2 is separately provided on the storage member 3, such that it is convenient for a user to mount and dismount the storage member 3. Moreover, the upper end of the storage member 3 is provided with the holding portion or holding member 31 which is convenient to hold, such that it is more convenient for the user to mount and dismount the storage member 3. Therefore, the user can directly mount and dismount the storage member 3 on the water surface without pulling the cleaning robot ashore. The operations are simple and easy and it is convenient for the user to clean the water surface cleaning robot, thus achieving good user experience.

In the present application, the holding portion or holding member 31 is hidden in the cover plate 2, such that the overall aesthetic of the cleaning robot is not affected and the visual effect is good.

An optimum embodiment of the present application is as follows:
A water surface cleaning robot includes a body having an accommodating cavity and a storage member 3 having at least one through hole.

An anti-collision assembly is fitted at the outer edge of the body, and two sides of the rear end of the body are each fitted with a driver 6 for pushing the body to move.

The anti-collision assembly includes at least two anti-collision wheels fitted together.

The two anti-collision wheels are fixedly connected to a side end of the body in a rotatable manner by means of a connector.

The storage member 3 is a cavity structure 32 having an upper end opening and is fitted on the body 1 in a detachable manner.

The body 1 is provided with the accommodating cavity 11 running through the upper and lower ends thereof, the accommodating cavity 11 being provided with an upper opening for receiving the storage member 3 from top to bottom.

A rolling member 372 capable of driving garbage to enter the cavity structure 32 is rotatably connected to the storage member 3 or the body 1.

Via continuous exploration and test, the present application breaks the technical bias that only one anti-collision wheel 51 is provided in the existing anti-collision structure. By providing the anti-collision structure having at least two anti-collision wheels 51, the impact force can be effectively decomposed and a good anti-collision effect is achieved, thereby prolonging the service life of the anti-collision wheels 51 and the body 1.

When the body 1 of the cleaning robot provided by the present application collides with other objects, in most cases, the objects firstly collide with one anti-collision wheel 51 in the anti-collision assembly 5. Since the axis of the anti-collision wheel 51 does not coincide with the axis of rotation of the anti-collision assembly 5 around the body 1, the impact force is converted into the rotating force of the anti-collision wheel 51 at this moment, such that the anti-collision wheel 51 and the anti-collision assembly 5 rotate around the body 1, effectively decomposing the impact force and thereby effectively avoiding impact damage.

In addition, since the two anti-collision wheels 51 are fitted together, at least one anti-collision wheel 51 can abut against other objects even if the anti-collision assembly 5 rotates, effectively preventing the body 1 from colliding with other objects and achieving a simple and practical structure and an ingenious design.

In the present application, a garbage collection opening is provided at the upper end of the storage member 3, and by changing the existing design in which garbage on the water surface enters the storage member 3 from the front end opening into a design in which the garbage enters the storage member 3 from the upper end opening, the collected garbage can be effectively prevented from scattering from the front end opening.

In the present application, in order to facilitate flowing of the garbage into the cavity of the storage member 3, the rolling member 372 is provided to drive the garbage to enter the storage member 3, and movement of the body 1 and suction of the garbage are configured independently, such that collection of the garbage can be achieved without movement of the cleaning robot, thereby effectively saving the energy and prolonging the working time of the cleaning robot. Moreover, by changing original passive entry into active entry, the collection efficiency is improved and a better water surface garbage cleaning effect is achieved.

Two sides of the body are each fitted with a driver, so as to facilitate adjustment to an advancing direction of the cleaning robot. The lower end of the body 1 is provided with a trumpet opening 4 at a position adjacent to the rolling member 372, the outer diameter of the trumpet opening 4 being larger than the inner diameter.

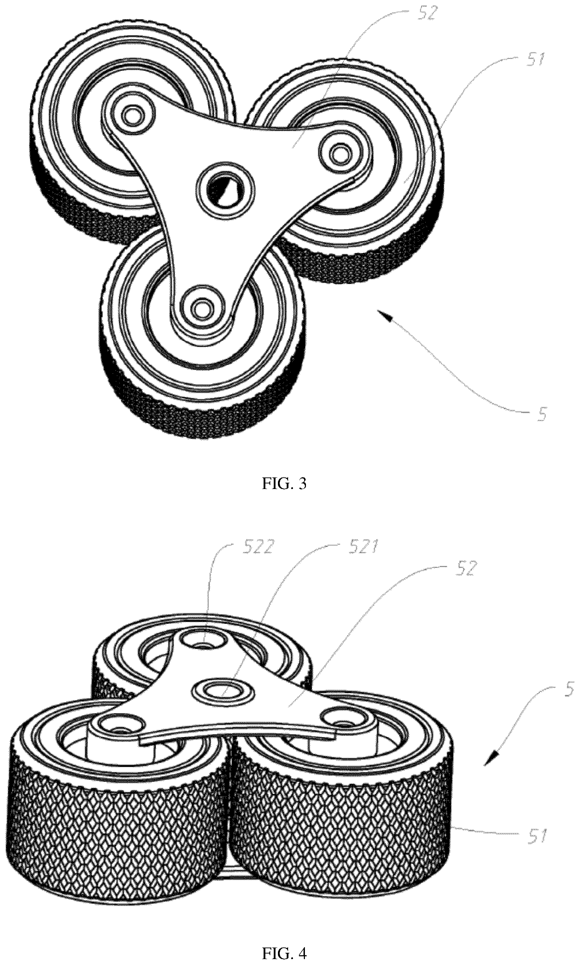

A specific embodiment of the structure of the anti-collision assembly 5 of the present application is as follows:
The anti-collision assembly 5 includes three anti-collision wheels 51 arranged in a staggered manner, the three anti-collision wheels 51 being arranged in a regular triangle shape, axis extension directions of the wheels being parallel. The anti-collision wheels 51 are evenly distributed, so as to ensure that the objects can meet one of the anti-collision wheels 51 regardless of angles at which the collision with the anti-collision assembly occurs and ensure that at least one anti-collision wheel 51 can correspond to other objects no matter how the anti-collision assembly 5 rotates, thus achieving a simple and practical structure. As compared with two wheels, three anti-collision wheels 51 fitted together can further improve the anti-collision effect, referring to FIGS. 3-4.

The connector 52 is a triangular member having a protruding side end respectively connected to the anti-collision wheel 51, preventing the connector 52 from interfering with a collision position.

A first pin hole 521 for connection to the body 1 is provided in the center of the triangular member.

A second pin hole 522 for connection to the anti-collision wheel 51 is respectively provided at the side end of the triangular member.

The triangular member is pinned on the body 1 in a rotatable manner by means of the first pin hole 521.

The anti-collision wheel 51 is pinned on the triangular member in a rotatable manner by means of the second pin hole 522.

The anti-collision wheels 51 can rotate independently, thus further improving the anti-collision effect and decreasing impact wear.

Another specific embodiment of the structure of the anti-collision assembly 5 of the present application is as follows:
There may be four or more anti-collision wheels 51. When there are more than three anti-collision wheels, the improvement to the anti-collision effect is not obvious, while the manufacturing costs and fitting difficulty are increased. Those skilled in the art may make a choice according to the actual situation.

A specific embodiment of a fitting position of the anti-collision assembly 5 of the present application is as follows:
The body 1 is a square structure having four side ends or two side surfaces of the front end each provided with the anti-collision assembly 5, effectively preventing the body 1 from colliding with other objects and achieving a simple and practical structure.

The anti-collision assembly 5 is partially or completely exposed out of the body 1. The anti-collision assembly 5 is partially exposed, such that the structural aesthetic can be effectively improved and the structure of the present application is compact.

The body 1 is provided with a mounting cavity for accommodating a portion of the structure of the anti-collision assembly 5.

The at least two anti-collision wheels 51 are exposed out of the mounting cavity, achieving a simple and practical structure.

A specific embodiment of an additionally provided ranging sensor of the present application is as follows:
Two sides of the front end of the body 1 are each provided with a mounting cavity 15 having a front end opening and for mounting a ranging sensor.

The ranging sensor is fitted deep in the mounting cavity 15 and has a transmitting end facing to the front end opening of the mounting cavity 15.

The transmitting end is spaced from the front end opening by a certain distance. Due to a relatively large error in short distance measurement of an existing ranging sensor, a transmitting distance of the transmitting end can be increased by mounting the transmitting end deep in the mounting cavity 15, so as to effectively improve the ranging accuracy and thus achieve an ingenious design and a practical and feasible solution.

The ranging sensor is a laser ranging sensor, an ultrasonic ranging sensor, or an infrared ranging sensor.

A specific embodiment of the rolling member 372 of the present application is as follows:
The rolling member 372 is provide with a sheet structure 371 capable of producing a water flow and adjacent to the upper end opening of the cavity structure 32.

In the present application, the upper end opening adjacent to the storage member 3 is fitted with the sheet structure 371 capable of producing a water flow, and the sheet structure 371 and the rolling member 372 form a collector 37 capable of effectively collecting garbage near the cleaning robot without garbage collection along a specific direction, further improving the collection efficiency of the cleaning robot and the garbage cleaning effect and thus achieving good user experience.

The sheet structure 371 is a strip blade or brush member. The upper edge of the strip blade is higher than the upper edge of the storage member 3, such that the driven garbage can automatically fall into the cavity of the storage member 3 under the effect of the water flow and the gravity, thus achieving a simple and practical structure.

The projections of the strip blade and the upper end opening of the storage member 3 in the vertical direction at least partially overlap, such that the driven garbage directly falls into the cavity of the storage member 3, thus effectively preventing the garbage from falling.

A specific embodiment of an additionally provided driving structure of the present application is as follows:
The rolling member 372 is fitted at an upper end portion of the storage member 3 and is connected to a driving source.

The driving source is fitted on the body 1 and is connected to the rolling member 372 by means of a gear set.

Due to a limited structural space of the storage member 3, it is impossible to mount a battery and a corresponding circuit. In order to realize energy supply of the driving source, the driving source is fitted on the body 1. Moreover, in order to realize flexible dismounting of the storage member 3, the driving source and the rolling member 372 are connected via a gear pair, so as to realize the effective contact and rapid separation of the driving source and the rolling member 372, thus achieving an ingenious design and a practical and feasible solution.

The gear set includes a first gear 373 fixedly connected to the rolling member 372 and a second gear 14 fixedly connected to a rotating end of the driving source, the face of the first gear 373 being perpendicular to the axial extension line of the rolling member 372, and the face of the second gear 14 being perpendicular to the axial extension line of the rotating end of the driving source.

A specific embodiment of an additionally provided holding structure and cover plate 2 of the present application is as follows:
The storage member 3 is provided with a holding portion or holding member 31 which is convenient for a user to hold and above which a cover plate 2 is provided.

One end of the cover plate 2 is hinged on the body 1, the cover face of the cover plate partially or completely covers the upper end opening of the storage member 3, and the other end of the cover plate is connected to a lifting assembly for driving the cover plate to go up and down, the lifting assembly being an air rod, a hydraulic rod, or a ball screw assembly.

In the present application, the cover plate 2 and the storage member 3 are separately provided, the cover plate 2 is hinged on the body 1, the cover face of the cover plate can cover the storage member 3, and no cover plate 2 is separately provided on the storage member 3, such that it is convenient for a user to mount and dismount the storage member 3. Moreover, the upper end of the storage member 3 is provided with the holding portion or holding member 31 which is convenient to hold, such that it is more convenient for the user to mount and dismount the storage member 3. Therefore, the user can directly mount and dismount the storage member 3 on the water surface without pulling the cleaning robot ashore. The operations are simple and easy and it is convenient for the user to clean the water surface cleaning robot, thus achieving good user experience.

In the present application, the holding portion or holding member 31 is hidden in the cover plate 2, such that the overall aesthetic of the cleaning robot is not affected and the visual effect is good.

In addition, the cover plate 2 fixed on the body 1 can effectively limit upward movement of the storage member 3, without addition of other structures for limiting the upward movement of the storage member 3. Therefore, the present application requires fewer parts and is easy to be produced, thus effectively reducing the manufacturing costs.

The storage member 3 is provided with a connecting portion 38 for fitting the rolling member 372, the connecting portion 38 being an arc structure rotationally connected to the rolling member 372 and being mounted on the body 1.

Two internal sides of the body 1 are each provided with an arc notch 13. The arc structure matches the shape of the arc notch 13, so as to achieve effective positioning of the rolling member 372 without affecting normal rotation of the rolling member 372, thus achieving a simple and practical structure.

The inner wall of the upper end of the accommodating cavity 11 of the body 1 is provided with at least one blocking portion 12, the blocking portion 12 extending into the cavity to form a support structure capable of abutting against the storage member 3. The body 1 positions the storage member 3 by means of the blocking portion 12, without the provision of a screwing structure, making it more convenient for a user to directly pick and place the storage member 3 on the body 1 and thus achieving a simple and practical structure.

The outer wall of the upper end of the storage member 3 is provided with at least one protruding rib 34, the protruding rib 34 extending outwards and protruding from the main body of the storage member 3 and capable of being mounted on the upper end wall surface of the blocking portion 12 of the body 1.

A vertical distance between the upper wall surface of the blocking portion 12 and the upper end surface of the body 1 is A, and a vertical distance between the lower wall surface 325 of the protruding rib 34 and the upper end surface of the storage member 3 is B, A being greater than or equal to B.

The holding member 31 is a handle member transversely provided on two sides or two ends of the storage member 3.

The handle member is located at the transverse center of gravity of the storage member 3, such that the stress is uniform when the user holds the holding member .

A specific embodiment of an additionally provided disinfection box 35 of the present application is as follows:
The lower end of the storage member 3 is fixedly connected to a disinfection box 35 having an accommodating space. The disinfection box 35 is provided with several holes, and a box cover 36 is detachably fitted on the main body of the disinfection box 35.

The disinfection box 35 and the storage member 3 are integrally provided, and both the disinfection and garbage collection functions can be achieved without the provision of other structures. The structure can facilitate production and manufacture and is convenient for the user to observe the use situation of disinfection products such as disinfectants or disinfection solids, thus facilitating timely replacement. The user can directly know the use situation of the disinfection products or replace the disinfection products when picking and placing the storage member 3, saving the time and effort and thus achieving good user experience.

A specific embodiment of the cover plate of the present application is as follows:
The cover plate 2 is obliquely fitted on the body 1 and has a front end lower than a rear end, the front end and the rear end being in smooth transition, the rear end of the cover plate 2 being hinged on the body 1, and the front end being clamped on the body 1.

The upper end surface of the cover plate 2 is covered with a solar panel 23 for absorbing solar energy, and a transparent window which facilitates observation of a collection situation of the storage member is provided in the central position of the cover plate.

A specific embodiment of the storage member of the present application is as follows:
The cavity structure of the storage member is a box structure having five wall surfaces, including a front wall surface 321, a rear wall surface 322, a left wall surface 323, a right wall surface 324, and a lower wall surface 325, at least the rear wall surface 322 and the lower wall surface 325 being each provided with several through holes 33. The diameter of the through hole is smaller than the width of the garbage to be collected, or the cavity of the storage member is covered with a filter screen to prevent the collected garbage from falling.

A specific embodiment of a positioning structure of the present application is as follows:
One of the connecting portion 38 of the storage member 3 and the cover plate 2 is provided with a square groove 381, and the other is provided with a square protrusion 22, the structural shapes of the square groove 381 and the square protrusion 22 matching each other. A torque is produced as the driving source drives the rolling member 372 to rotate, making the storage member 3 vibrate. Therefore, square positioning structures are provided on the connecting portion 38 and the cover plate 2, so as to realize effective positioning of the storage member 3 implemented by the cover plate 2, thus achieving a simple and practical structure.

One of the holding member and the cover plate 2 is provided with a positioning groove 311, and the other is provided with a positioning protrusion 21, the structural shapes of the positioning groove 311 and the positioning protrusion 21 matching each other.

The garbage includes industrial waste, domestic waste, animal and plant garbage, etc., such as leaves, floating paper, insect remains, water surface floating oil dirt, water surface floating dust, garbage bags, and branches.

In the present application, a fixed coupling or fixed connection mode may be screwing, welding, riveting, or inserting, or connection implemented via a third part. Those skilled in the art may make a choice according to the actual situation.

The preferred embodiments of the present application are described above and are not intended to limit the present application. Any modification, equivalent replacement, and improvement made within the spirit and principles of the present application shall be included in the protection scope of the present application.

## Claims

1. A water surface cleaning robot, comprising a body (1) having an accommodating cavity (11) and a storage member (3) having at least one through hole, wherein
an anti-collision assembly (5) is fitted at the outer edge of the body (1);
the anti-collision assembly (5) comprises at least two anti-collision wheels (51) fitted together;
the two anti-collision wheels (51) are fixedly connected to a side end of the body (1) in a rotatable manner by means of a connector (52);
the storage member (3) is a cavity structure (32) having an upper end opening and is fitted on the body (1) in a detachable manner;
the body (1) is provided with the accommodating cavity (11) running through the upper and lower ends thereof, the accommodating cavity (11) being provided with an upper opening for receiving the storage member from top to bottom; and
a rolling member (372) capable of driving garbage to enter the cavity structure (32) is rotatably connected to the storage member (3) or the body (1).

2. The water surface cleaning robot according to claim 1, wherein
the anti-collision assembly (5) comprises three anti-collision wheels (51) arranged in a staggered manner, the three anti-collision wheels (51) being arranged in a regular triangle shape, axis extension directions of the wheels being parallel; and
the connector (52) is a triangular member having a protruding side end respectively connected to the anti-collision wheel (51).

3. The water surface cleaning robot according to claim 2, wherein
a first pin hole (521) for connection to the body is provided in the center of the triangular member;
a second pin hole (522) for connection to the anti-collision wheel (51) is respectively provided at the side end of the triangular member;
the triangular member is pinned on the body (1) in a rotatable manner by means of the first pin hole (521); and
the anti-collision wheel (51) is pinned on the triangular member in a rotatable manner by means of the second pin hole (522).

4. The water surface cleaning robot according to claim 1, wherein
the body (1) is a square structure having four side ends or two side surfaces of the front end each provided with the anti-collision assembly (5); and
the anti-collision assembly (5) is partially or completely exposed out of the body (1).

5. The water surface cleaning robot according to claim 4, wherein
the body (1) is provided with a mounting cavity for accommodating a portion of the structure of the anti-collision assembly (5), and the at least two anti-collision wheels (51) are exposed out of the mounting cavity.

6. The water surface cleaning robot according to claim 5, wherein
two sides of the front end of the body (1) are each provided with a mounting cavity (15) having a front end opening and for mounting a ranging sensor;
the ranging sensor is fitted deep in the mounting cavity (15) and has a transmitting end facing to the front end opening of the mounting cavity (15);
the transmitting end is spaced from the front end opening by a certain distance; and
the ranging sensor is a laser ranging sensor, an ultrasonic ranging sensor, or an infrared ranging sensor.

7. The water surface cleaning robot according to claim 1, wherein
the rolling member (372) is provide with a sheet structure (371) capable of producing a water flow and adjacent to the upper end opening of the cavity structure (32);
the sheet structure (371) is a strip blade or brush member, the upper edge of the strip blade being higher than the upper edge of the storage member (3);
the projections of the strip blade and the upper end opening of the storage member (3) in the vertical direction at least partially overlap; and
two sides of the rear end of the body are each provided with a driver for pushing the body to move.

8. The water surface cleaning robot according to claim 7, wherein
the rolling member (372) is fitted at an upper end portion of the storage member (3) and is connected to a driving source;
the driving source is fitted on the body (1) and is connected to the rolling member (372) by means of a gear set; and
the gear set comprises a first gear (373) fixedly connected to the rolling member (372) and a second gear (14) fixedly connected to a rotating end of the driving source, the face of the first gear (373) being perpendicular to the axial extension line of the rolling member (372), and the face of the second gear (14) being perpendicular to the axial extension line of the rotating end of the driving source.

9. The water surface cleaning robot according to claim 8, wherein
the storage member (3) is provided with a holding portion or holding member (31) which is convenient for a user to hold and above which a cover plate (2) is provided;
one end of the cover plate (2) is hinged on the body (1), the cover face of the cover plate partially or completely covers the upper end opening of the storage member (3), and the other end of the cover plate is connected to a lifting assembly for driving the cover plate to go up and down, the lifting assembly being an air rod, a hydraulic rod, or a ball screw assembly;
the storage member (3) is provided with a connecting portion (38) for fitting the rolling member (372), the connecting portion (38) being an arc structure rotationally connected to the rolling member (372) and being mounted on the body (1);
two internal sides of the body (1) are each provided with an arc notch (13), the arc structure matching the shape of the arc notch (13);
the inner wall of the upper end of the accommodating cavity (11) of the body (1) is provided with at least one blocking portion (12), the blocking portion (12) extending into the cavity to form a support structure capable of abutting against the storage member (3);
the outer wall of the upper end of the storage member (3) is provided with at least one protruding rib (34), the protruding rib (34) extending outwards and protruding from the main body of the storage member (3) and capable of being mounted on the upper end wall surface of the blocking portion (12) of the body (1); and
a vertical distance between the upper wall surface of the blocking portion (12) and the upper end surface of the body (1) is A, and a vertical distance between the lower wall surface (325) of the protruding rib (34) and the upper end surface of the storage member (3) is B, A being greater than or equal to B.

10. The water surface cleaning robot according to claim 9, wherein
the holding member (31) is a handle member transversely provided on two sides or two ends of the storage member (3);
the handle member is located at the transverse center of gravity of the storage member (3);
the lower end of the storage member (3) is fixedly connected to a disinfection box (35) having an accommodating space;
the disinfection box (35) is provided with several holes, and a box cover (36) is detachably fitted on the main body of the disinfection box (35);
the cover plate (2) is obliquely fitted on the body (1) and has a front end lower than a rear end, the front end and the rear end being in smooth transition, the rear end of the cover plate (2) being hinged on the body (1), and the front end being clamped on the body (1);
the upper end surface of the cover plate (2) is covered with a solar panel (23) for absorbing solar energy, and a transparent window (24) which facilitates observation of a collection situation of the storage member is provided in the central position of the cover plate;
the lower end of the body (1) is provided with a trumpet opening (4) at a position adjacent to the rolling member (372), the outer diameter of the trumpet opening (4) being larger than the inner diameter;
the cavity structure (32) of the storage member (3) is a box structure having five wall surfaces, comprising a front wall surface (321), a rear wall surface (322), a left wall surface (323), a right wall surface (324), and a lower wall surface (325), at least the rear wall surface (322) and the lower wall surface (325) being each provided with several through holes (33); and
one of the connecting portion (38) of the storage member (3) and the cover plate (2) is provided with a square groove (381), and the other is provided with a square protrusion (22), the structural shapes of the square groove (381) and the square protrusion (22) matching each other.

11. A water surface cleaning robot, comprising a body (1) having an accommodating cavity (11) and a storage member (3) having at least one through hole, wherein
the storage member (3) is a cavity structure (32) having an upper end opening and is fitted on the body (1) in a detachable manner;
the body (1) is provided with the accommodating cavity (11) running through the upper and lower ends thereof, the accommodating cavity (11) being provided with an upper opening for receiving the storage member from top to bottom; and
a rolling member (372) capable of driving garbage to enter the cavity structure (32) is rotatably connected to the storage member (3) or the body (1).

12. The water surface cleaning robot according to claim 11, wherein
the rolling member (372) is provide with a sheet structure (371) capable of producing a water flow and adjacent to the upper end opening of the cavity structure (32);
the sheet structure (371) is a strip blade or brush member, the upper edge of the strip blade being higher than the upper edge of the storage member (3);
the projections of the strip blade and the upper end opening of the storage member (3) in the vertical direction at least partially overlap; and
two sides of the rear end of the body are each provided with a driver for pushing the body to move.

13. The water surface cleaning robot according to claim 12, wherein
the rolling member (372) is fitted at an upper end portion of the storage member (3) and is connected to a driving source;
the driving source is fitted on the body (1) and is connected to the rolling member (372) by means of a gear set; and
the gear set comprises a first gear (373) fixedly connected to the rolling member (372) and a second gear (14) fixedly connected to a rotating end of the driving source, the face of the first gear (373) being perpendicular to the axial extension line of the rolling member (372), and the face of the second gear (14) being perpendicular to the axial extension line of the rotating end of the driving source.

14. A water surface cleaning robot, comprising a body (1) having an accommodating cavity (11) and a storage member (3) having at least one through hole, wherein
the storage member (3) is a cavity structure (32) having an upper end opening and is fitted on the body (1) in a detachable manner;
the body (1) is provided with the accommodating cavity (11) running through the upper and lower ends thereof, the accommodating cavity (11) being provided with an upper opening for receiving the storage member from top to bottom;
the storage member (3) is provided with a holding portion or holding member (31) which is convenient for a user to hold and above which a cover plate (2) is provided; and
one end of the cover plate (2) is hinged on the body (1), and the cover face of the cover plate partially or completely covers the upper end opening of the storage member (3).
